# EUROPEAN PATENT APPLICATION

(11) **EP 4 571 644 A1**
(43) Date of publication of application: **18.06.2025**
(21) Application number: 23215844.4
(22) Date of filing: 12.12.2023
(51) Int. Cl.: G06T 7/246, G06T 7/73

(54) **APPARATUS, COMPUTER PROGRAM, METHOD FOR MODELLING AN ENVIRONMENT AND USE THEREOF**

(71) Applicant: Continental Automotive Technologies GmbH, 30175 Hannover (DE)
(72) Inventor: Kästingschäfer, Marius, 81739 München (DE); Dr. Bernhard, Sebastian, 81739 München (DE)
(74) Representative: Continental Corporation

(57) **Abstract**

Embodiments of the present disclosure relate to apparatus, computer program, method for modelling an environment and use thereof. The method comprises obtaining separate models of a static background and one or more mobile objects. Further, the method comprises obtaining information on a pose and motion of the mobile objects. The method also comprises determining, based on the information on a pose and motion of the mobile objects, time-dependent mapping parameters (also referred to herein as "mapping parameters") for mapping the mobile objects to the background and mapping the mobile objects to the background based on the mapping parameters to generate a model of the environment.

## Description

Embodiments of the present disclosure relate to apparatus, computer program, method for modelling an environment and use thereof. In particular, but not exclusively, the embodiments may relate to a concept for modelling the environment for a point in time in the future and/or for controlling an object (e.g., a vehicle or a robot) in the environment.

Neural radiance fields (NeRF) are a very recent approach to rendering novel viewpoints of a scene given a set of camera images taken of the scene. It was a breakthrough approach published in 2020 showing the potential of using neural networks to perform photo-realistic viewpoint rendering. Since then, there has been an explosion in academic research making use of implicit and explicit neural representation methods for representing static and dynamic scenes.

Exemplary modelling concepts comprise:
- Dynamic Neural Radiance Field methods (I.), which include a time dimension to model scenes with moving objects.
- Video Prediction Models (II.), often consisting of transformer or diffusion model based autoregressive pixel modelling, such models do not model 3D space consistently.
- 3D prediction methods (III.), which perform temporal modelling in a lower dimensional latent space followed by an encoder step.
- 3D Scene decomposition methods, which are applied for separating objects in a scene (for example background and foreground objects or dynamic and static objects) There have been no approaches that perform long-term predictions while preserving geometrical / temporal object consistency and enable novel view synthesis with varying space and time coordinates. The idea proposed in this invention disclosure proposes such a method.

However, video prediction models are limited with respect to the following aspects:
a. The models are usually unable to model 3D space consistently and, therefore, are unable to render a model of the environment from different positions or angles. They lack controllability since they do not model the necessary input parameter (such as pose parameters, camera angles, or intrinsic camera parameters).
b. Video prediction models often produce hallucinatory artifacts (producing non existing environment components or extrapolating in a way that is undesired) which impair trustworthiness in such models and reliability.

Dynamic NeRF methods face the following problems:
c. Are unable to perform any kind of extrapolation along the temporal dimension, by design they are thus unable to perform predictions. Their novel view synthesis abilities are limited to the past and do not allow extent to future timesteps.

Existing 3D prediction methods model are faced with the challenge of:
d. Modelling scenes into lower dimensional latent space which leads to an information loss during the compression step and to a deterioration in visual quality and the occurrence of visual artifacts.
e. Such models are not guaranteed to be geometrically faithful and thus often lack spatial or temporal consistency.
f. Requiring explicit action input instead of implicit modelling the scene evolution.

One idea of the present disclosure is to combine neural explicit and implicit representations (such as TriPlanes as laid out in more detail later) for dynamic foreground objects with neural explicit or implicit representations for static background objects to make temporal predictions. In doing so, the proposed approach retains advantages of existing methods but overcomes their limitations.

Embodiments of the present disclosure provide a method for modelling an environment. The method comprises obtaining separate models of a static background and one or more mobile objects. Further, the method comprises obtaining information on a pose and motion of the mobile objects. The method also comprises determining, based on the information on a pose and motion of the mobile objects, time-dependent mapping parameters (also referred to herein as "mapping parameters") for mapping the mobile objects to the background and mapping the mobile objects to the background based on the mapping parameters to generate a model of the environment.
1. The proposed approach allows to consistently model 3D space and allows a controllable synthesis of novel views of the environment. Accordingly, the approach may be referred to herein as "novel view synthesis". This results in pose parameters and camera angles being adjustable and still being able to render novel views from the underlying scene (related to disadvantage a. of existing models).
2. Further, the proposed approach allows for modelling the underlying 3D space faithfully by decomposing objects instead of relying on pixel-level autoregressive modelling which rules out hallucinatory artifacts and leads to much higher spatial and temporal consistency (related to disadvantage b. and d. of existing models)
3. As well, the method may model both space and time and unlike previous models is able to perform extrapolations, as laid out in more detail later. Such predictions then allow to perform novel view synthesis during future time steps (related to disadvantage c. of existing models)
4. Further, the method allows to reconstruct scenes in high visual fidelity. The method may not be bottlenecked using an information bottleneck and can also represent fine-grained details of objects or the surrounding (related to disadvantage d. of existing models).

In practice, obtaining the separate models of the static background and the one or more mobile objects may comprise obtaining a plurality of images of the environment and applying object detection to the images to identify the mobile objects and distinguish them from the background.

Obtaining the separate models of the static background and the one or more mobile objects may further comprise mapping the models to respective separate coordinate system., e.g., a so-called "TriPlane". In context of the present disclosure a TriPlane can be understood as a planarized radiance field consisting of three features planes.

In some applications, the images are taken at different point in time. So, the images may be representative for at least two different points in time and perspectives of the environment. In this event, obtaining information on the pose and motion of the mobile objects may comprise obtaining the information on the pose and motion of the mobile objects from images of different time and different perspectives.

Mapping the mobile objects to the background based on the mapping parameters, e.g., comprises selecting a point in time, determining the mapping parameters for the selected point in time and mapping the mobile objects to the background based on the mapping parameters to generate a model of the environment for the selected point in time. The mapping parameters, e.g., can be learned using machine learning techniques to determine where to localize the selected object in time and space.

In some embodiments, the method further comprises providing the model of the environment for controlling an object in the environment.

The object, e.g., is an autonomously or semi-autonomously driving vehicle and/or a robot. In practice, e.g., the model, e.g., is used to navigate or maneuver a vehicle or a robot through the environment.

According to some examples, the environment can be rendered or modelled for different point in time. For this, determining the mapping parameters for the selected point in time may comprise extrapolating the mapping parameters. For the extrapolation, different sets of mapping parameters of different recording times (point in time where the images are recorded) may be used as input for the extrapolation.

The extrapolation, thus, allows to predict future scenarios. This may be particularly useful in applications where an object is controlled in the environment, e.g., to anticipate future scenarios and control the object in consideration of them.

As well, the mapping parameters may be adjusted such that the model represents different possible or expectable configurations of the environment, e.g., where a mobile object is on different lanes of a street or has different driving speeds.

In some embodiments, the method further comprises displaying the model of the environment to a user.

Further embodiments provide a method for adapting a model of the environment, the method comprising adapting the time-dependent mapping parameters of a model obtainable by the proposed method for modelling the environment for representing the environment in a different configuration. In doing so, e.g., the same mobile object can be modelled on different lanes or with different driving speeds.

A skilled person having benefit from the present disclosure will appreciate that the proposed method may be implemented as a computer-implemented method and/or in a computer program.

Accordingly, embodiments of the present disclosure provide a computer program comprising instructions which, when the computer program is executed by a computer, cause the computer to carry out the method of any one of the preceding claims.

Further embodiments relate to the use of a model obtainable through a method according to the present disclosure.

As well, embodiments may provide an apparatus comprising one or more interfaces for communication and a data processing circuit configured to execute the proposed method.

Further, embodiments are now described with reference to the attached drawings. It should be noted that the embodiments illustrated by the referenced drawings show merely optional embodiments as an example and that the scope of the present disclosure is by no means limited to the embodiments presented:

### Brief description of the drawings

- Fig. 1: shows a flow chart schematically illustrating an embodiment of a method for modelling an environment;
- Fig. 2: shows a flow chart schematically illustrating another embodiment of the method; and
- Fig. 3: shows a block diagram schematically illustrating an apparatus according to the proposed approach.

As laid out above in more detail, concepts of modelling an environment may exhibit various shortcomings. The present disclosure provides a solution to them. Further aspects and details of various embodiments are laid out in more detail below with reference to the appended drawings.

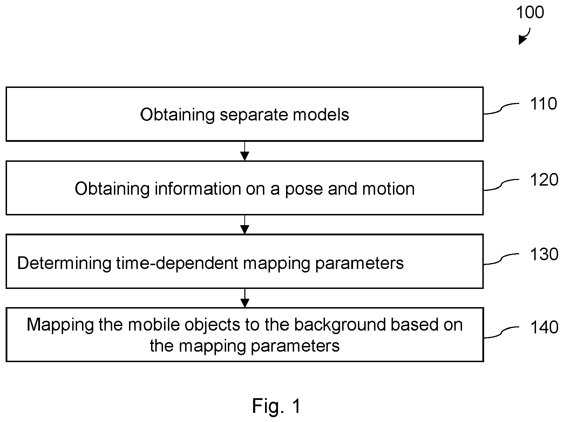

Fig. 1 shows a flow chart schematically illustrating an embodiment of a method 100 for modelling an environment. For this, e.g., multiple images of the environment are obtained, e.g., camera images, and the environment is modelled based on the camera images.

According to one idea of the present approach, then, mobile objects and their background in the images are then modelled separately. So, method 100 comprises obtaining 110 separate models of a static background and one or more mobile objects. For this, e.g., various object detection segmentation techniques can be used which are able to distinguish between the mobile objects and the background. In practice, the mobile objects may include persons, vehicles, animals, and/or the like. The background may include various static objects such as buildings, geographical features (e.g., trees, mountains, water bodies), the sky, infrastructure objects (e.g., bridges), and/or the like.

In context of the present disclosure, the separate models may be understood as separate representations of the objects and the background such that multiple respective models are generated for one or more of the objects and the background. In practice, e.g., if the images visualize a vehicle, a person, and a background, a first model of the vehicle, a second model of the person, and a third model of their background are generated.

In practice, the models of the objects and the background, e.g., are mapped to respective separate coordinate systems.

Further, the method 100 suggests obtaining 120 information on a pose and motion of the mobile objects. The information on the pose, e.g., includes information on a position and/or orientation of the objects. For obtaining the information on the pose, e.g., images from different perspectives of the objects and triangulation-based techniques may be used.

The information on the motion, e.g., includes information on a velocity, speed, rotation, and/or acceleration of the objects. To obtain the information on the motion, e.g., images of different point in time are compared and the information on the motion may be determined from spatial changes (e.g., from a travelled distance) and a time (period) between the compared images.

Method 100 further provides for determining 130, based on the information on a pose and motion of the mobile objects, time-dependent mapping parameters for mapping the mobile objects to the background.

In context of the present disclosures the mapping parameter, e.g., can be understood as a function indicating how the models of the objects are mapped onto the background. So, the mapping parameters, e.g., indicate a relative size, position, and/or orientation relative to the background.

For obtaining the mapping parameters, a relation between the models and the background is obtained from the images. A skilled person having benefit from the present disclosure will understand that this relation and, therefore, the mapping parameters, may change over time such that the mapping parameters may change for different images having different recording times. According to one idea of the present disclosure, this change of the mapping parameters may be used to derive their time-dependency, i.e., how the mapping parameters change over time. So, the time-dependent mapping parameters not only indicate how the models are mapped for the recording times but also how the objects move over time, e.g., in between the recording times.

In practice, e.g., a neural network may be trained to provide the mapping parameters using the images of the environment for different recording times and the separate models as training data (e.g., the images are used as ground truth). In doing so, various machine learning techniques may be used.

Further, method 100 comprises mapping 140 the mobile objects to the background based on the mapping parameters to generate a model of the environment. In doing so, the objects are sized and/or located in accordance with the mapping parameters to obtain a modelled representation of the environment. In doing so, the time-dependent mapping parameters allow to model the environment for different point in time, not only at recording times but also other times.

The skilled person will appreciate that extrapolation of the mapping parameters over time even allows to model the environment for point in time in the past or in the future.

So, in applications, e.g., a desired point in time may be selected and the model is generated according to the present approach for the selected point in time (in the future, the past, for the recording times, or in between them).

Also, the mapping parameters may be such that the environment may be rendered for different (e.g., user-defined) perspectives of the environment.

The present approach may be applied in various applications including, in particular, automotive and robotic applications.

In such applications, e.g., a vehicle or robot is controlled in the environment based on the generated environment model, e.g., to interact with the environment or to maneuver through it.

Alternatively or additionally, the model may be displayed to a user, e.g., on a screen or the like.

Other exemplary applications, e.g., comprise:
- Autonomous control systems operating in 3D (drones, offroad vehicles) since safe and comfortable driving needs anticipatory planning. Expectations about future motions of dynamic agents the surrounding are of particular importance here. Especially human operators are most capable to make visual input-based decisions.
- Parking assistant for drivers: For drivers it is useful to iterate between different outside views of the car during parking, particularly in narrow highly frequented traffic areas. Knowing how other drivers move in the surrounding can help when to leave or get into a free parking spot.

- Digital twin for infrastructure applications: tracking and predicting traffic is useful for improving the traffic flow. Cameras on the infrastructure together with the proposed approach can also be used for traffic or pedestrian predictions. In such cases the technology might help to perform anomaly detection.
- Data augmentation: create views of realistic but unobserved, yet likely driving scenarios. Here, it could help increase the amount of available training data.

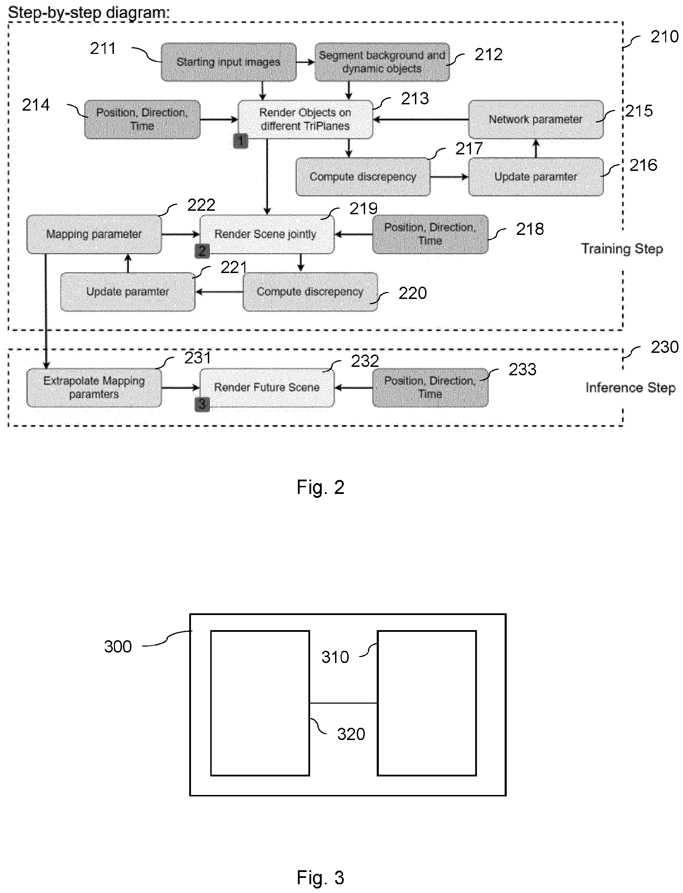

Further features and details are described below with reference to Fig. 2.

As can be seen, the embodiment of Fig. 2 provides for a two-stage approach including a training stage 210 and an inference stage 230.

In the training stage 210, the time-dependent mapping parameters are obtained. In the inference stage, the mapping parameters, then, are used to render the environment (also referred to herein as "scene").

The training stage 210 includes obtaining (starting input) images of the environment in step 211 and segmenting background and the mobile objects (also referred to herein as "dynamic objects") from each other in another step 212.

In addition to this, information on a position, direction, and time of recordings is obtained in step 214, e.g., from a clock and/or sensors of a camera system (e.g., a surround view camera system of a vehicle) and/or from user input.

In a further step 213, the segmented objects and the background are rendered on different or separate TriPlanes (without unnecessary compression). For this, a neural network may be used, and the neural network may be trained to render the objects properly. To this end, a discrepancy between a representation of the rendered objects and the objects in the images is determined in step 217 and network parameters of the neural network are updated accordingly such that the discrepancy is reduced. The updated network parameters are then used in step 215 to render the objects on the TriPlanes. In doing so, a three-dimensional representation of the objects is achieved.

This leads to advantage 1 of the proposed method, namely that the fact that the proposed approach allows to model each 3D object separately improves spatial and temporal object consistency.

In step 219, the separate TriPlanes are combined into a single plane using learned or computed time-dependent mapping parameters. A perspective of the representation in the single plane is determined based on information on a position, direction, and time of the perspective. Those information is obtained in step 218, e.g., from a user input.

As outlined above, the mapping parameters encode the dynamic objects' position coordinates, scaling, object rotation and scene specific appearance effects with dependency on time.

For obtaining the mapping parameters, another neural network may be used. In doing so, initial mapping parameters may be used and a discrepancy of the rendered environment and the images as training data is determined in step 220. In a next step 221, network parameters of the other neural network are adapted accordingly such that the discrepancy is reduced to obtain appropriate time-dependent mapping parameters in step 222. For the time-dependency, the mapping is learned for several time-steps, e.g., based on images of different recording times.

When rendering the objects jointly hallucinatory artifacts will not occur since the model is not as generative and relies on 3D objects instead, resulting in advantage 2 of our method.

The inference stage 230 provides for extrapolating the mapping parameters which allows predictions (while maintaining the 3D object geometry) in step 231.

The extrapolated mapping parameters can now be used to render the TriPlanes jointly at a future timestep and from a novel viewpoint in step 232.

This way, the proposed approach allows to perform extrapolations while maintaining novel view synthesis abilities. This ability as mentioned in advantage 3. is what particularly distinguishes the suggested approach from other concepts. The high visual fidelity is an additional benefit of our method (advantage 4.).

### Input:

- Input images from the current and past timesteps collected from camera sensors Internal (e.g., surround view camera sensors from an equipped vehicle)
- Position coordinates for the cameras from which the images where obtained (alternatively such values can also be obtained using an off-the-shelf Structure-fromMotion algorithm such as Colmap).
- A segmentation of background and dynamic objects is applied (as it could be obtained using an open-source segmentation model such as SAM).
- The requested viewpoint and timepoint for rendering the output image (relative to the current pose of the vehicle).

### Output:

- A future photorealistic 3D scene representation that can be rendered from multiple views.
- The rendered image at the requested viewpoint and point in time.

For this, a position, direction, and time for the novel viewpoint (perspective) is obtained in step 233, e.g., from user input or from an application where the proposed approach is deployed. In automotive or robotic applications, the future viewpoint may be determined based on planned trajectories, e.g., for point on the trajectory where a vehicle or a robot is supposed to be in the future.

The suggested method may be implemented in various apparatuses.

Fig. 3 shows a block diagram schematically illustrating an embodiment of such an apparatus 300. The apparatus comprises one or more interfaces 310 for communication and a data processing circuit 320 configured to execute the proposed method.

In embodiments, the one or more interfaces 310 may comprise wired and/or wireless interfaces for transmitting and/or receiving communication signals in connection with the execution of the proposed concept. In practice, the interfaces, e.g., comprise pins, wires, antennas, and/or the like. As well, the interfaces may comprise means for (analog and/or digital) signal or data processing in connection with the communication, e.g., filters, samples, analog-to-digital converters, signal acquisition and/or reconstruction means as well as signal amplifiers, compressors and/or any encryption/decryption means.

The data processing circuit 320 may correspond to or comprise any type of programable hardware. So, examples of the data processing circuit 320, e.g., comprise a memory, microcontroller, field programable gate arrays, one or more central, and/or graphical processing units. To execute the proposed method, the data processing circuit 320 may be configured to access or retrieve an appropriate computer program for the execution of the proposed method from a memory of the data processing circuit 320 or a separate memory which is communicatively coupled to the data processing circuit 320.

In the foregoing description, it can be seen that various features are grouped together in examples for the purpose of streamlining the disclosure. This method of disclosure is not to be interpreted as reflecting an intention that the claimed examples require more features than are expressly recited in each claim. Rather, as the following claims reflect, subject matter may lie in less than all features of a single disclosed example. Thus, the following claims are hereby incorporated into the description, where each claim may stand on its own as a separate example. While each claim may stand on its own as a separate example, it is to be noted that, although a dependent claim may refer in the claims to a specific combination with one or more other claims, other examples may also include a combination of the dependent claim with the subject matter of each other dependent claim or a combination of each feature with other dependent or independent claims. Such combinations are proposed herein unless it is stated that a specific combination is not intended. Furthermore, it is intended to include also features of a claim to any other independent claim even if this claim is not directly made dependent to the independent claim.

Although specific embodiments have been illustrated and described herein, it will be appreciated by those of ordinary skill in the art that a variety of alternate and/or equivalent implementations may be substituted for the specific embodiments shown and described without departing from the scope of the present embodiments. This application is intended to cover any adaptations or variations of the specific embodiments discussed herein. Therefore, it is intended that the embodiments be limited only by the claims and the equivalents thereof.

## Claims

1. A method (100) for modelling an environment, the method (100) comprising:
obtaining (110) separate models of a static background and one or more mobile objects;
obtaining (120) information on a pose and motion of the mobile objects;
determining (130), based on the information on a pose and motion of the mobile objects, time-dependent mapping parameters for mapping the mobile objects to the background; and
mapping (140) the mobile objects to the background based on the mapping parameters to generate a model of the environment.

2. The method (100) of claim 1, wherein obtaining the separate models of the static background and the one or more mobile objects comprises:
obtaining a plurality of images of the environment;
applying object detection to the images to identify the mobile objects and distinguish them from the background.

3. The method (100) of claim 2, wherein obtaining the separate models of the static background and the one or more mobile objects further comprises mapping the models to respective separate coordinate system.

4. The method (100) of any one of claim 2 or 3, wherein the images are representative for at least two different points in time and perspectives of the environment, and wherein obtaining information on the pose and motion of the mobile objects comprises obtaining the information on the pose and motion of the mobile objects from images of different time and different perspectives.

5. The method (100) of any one of the preceding claims, wherein mapping the mobile objects to the background based on the mapping parameters comprises:
selecting a point in time;
determining the mapping parameters for the selected point in time; and
mapping the mobile objects to the background based on the mapping parameters to generate a model of the environment for the selected point in time.

6. The method (100) of claim 5, wherein determining the mapping parameters for the selected point in time comprises extrapolating the mapping parameters.

7. The method (100) of any one of the preceding claims, wherein the method (100) further comprises providing the model of the environment for controlling an object in the environment.

8. The method (100) of claim 7, wherein the object is an autonomously or semi-autonomously driving vehicle and/or a robot.

9. The method (100) of any one of the preceding claims, wherein the method (100) further comprises displaying the model of the environment to a user.

10. A method for adapting a model of the environment, the method comprising adapting the time-dependent mapping parameters of a model obtainable by any one of the preceding claims for representing the environment in a different configuration.

11. A computer program comprising instructions which, when the computer program is executed by a computer, cause the computer to carry out any one of the methods (100) of any one of the preceding claims.

12. The use of a model obtainable through a method (100) according to any one of the claims 1 to 9.

13. An apparatus (300) comprising:
one or more interfaces (310) for communication; and
a data processing circuit (320) configured to execute the method (100) of any one of the claims 1 to 10.
